# EUROPÄISCHE PATENTSCHRIFT

(11) **EP 2 848 181 B1**
(45) Veröffentlichungstag und Bekanntmachung des Hinweises auf die Patenterteilung: **09.11.2016**
(21) Anmeldenummer: 14183501.7
(22) Anmeldetag: 04.09.2014
(51) Int. Cl.: A47L 15/48, A47L 15/00, A47L 15/42

(54) **Spülautomat, insbesondere Reinigungs- und/oder Desinfektionsautomat für gewerbliche Zwecke**
Rinsing machine, in particular a cleaning and/or disinfection machine for commercial purposes
Automate de rinçage, notamment automate de nettoyage et/ou désinfection à but industriel

(30) Priorität: 12.09.2013 DE 102013110007
(43) Veröffentlichungstag der Anmeldung: 18.03.2015
(73) Patentinhaber: Miele & Cie. KG, 33332 Gütersloh (DE)
(72) Erfinder: Mracek, Maik, 33334 Gütersloh (DE)

(56) Entgegenhaltungen:
- EP-A1- 2 301 409
- EP-A1- 2 789 284
- EP-A2- 2 292 132

## Beschreibung

Die Erfindung betrifft einen Spülautomaten, insbesondere in Form eines Reinigungs- und/oder Desinfektionsautomaten für gewerbliche Zwecke, mit einem einen Spülraum bereitstellenden Spülbehälter und einer Trocknungseinrichtung zur Trocknung von im Spülraum befindlichem Spülgut, wobei die Trocknungseinrichtung eine ein reversibel dehydrierbares Sorptionsmittel bereitstellende Sorptionseinheit aufweist.

Ein Spülautomat der eingangs genannten, das heißt gattungsgemäßen Art ist aus dem Stand der Technik an sich gut bekannt, beispielsweise aus der DE 10 2011 000 167 A1.

Gattungsgemäße Spülautomaten verfügen über einen Spülbehälter, der seinerseits einen Spülraum bereitstellt. Der Spülraum dient im bestimmungsgemäßen Verwendungsfall der Aufnahme von zu reinigendem Spülgut.

Zur Beaufschlagung von gereinigtem Spülgut mit Trocknungsluft dient eine Trocknungseinrichtung. Diese verfügt typischerweise über ein Gebläse, das im Trocknungsfall Trocknungsluft in den Spülraum einfördert.

Im einfachsten Fall dient die über das Gebläse in den Spülraum eingeförderte Trocknungsluft dazu, die im Spülraum befindliche, warmfeuchte Luft aus dem Spülraum auszutreiben. Die im Spülraum befindliche warmfeuchte Luft wird also durch die von außen zugeführte Trocknungsluft ausgetauscht.

Von Nachteil dieser Verfahrensdurchführung ist der hohe Energieverlust. Zum einen wird die im Spülraum befindliche warmfeuchte Luft ungenutzt an die Umgebung abgegeben und die zugeführte Trocknungsluft muss vor einem Einführen in den Spülraum aufgeheizt werden. Zum anderen geht dem gesamten Spülsystem durch die Abförderung der feuchtwarmen Innenraumluft Wasser verloren, das im weiteren Verfahrensgang zu ersetzen ist. Bei Spül- und Desinfektionsautomaten für gewerbliche Zwecke können dies drei Liter und mehr an Wasser sein, die durch Austrag der feuchtwarmen Spülraumluft in Form von Dampf ungenutzt an die Umgebung abgegeben werden.

Um die voraufgeführten Nachteile zu vermeiden und Ressourcen zu schonen, ist aus dem Stand der Technik die sogenannte Sorptionstrocknung bekannt geworden. Im Falle der Sorptionstrocknung ist die Trocknungseinrichtung mit einer Sorptionseinheit ausgerüstet. Diese stellt ein reversibel dehydrierbares Sorptionsmittel bereit, beispielsweise Zeolith.

Ein Spülautomat mit einer derartigen Sorptionstrocknungseinrichtung ist etwa aus der EP 2292132 A2 bekannt.

Bei der Sorptionstrocknung wird dem Spülraum die sich dort nach dem letzten Spülgang befindliche feuchtwarme Luft entnommen und der Sorptionseinheit zugeführt. Innerhalb der Sorptionseinheit findet ein Kontakt zwischen der feuchtwarmen Luft und dem Sorptionsmittel statt, infolgedessen die in der feuchtwarmen Luft befindlichen Wassermoleküle vom Sorptionsmittel gebunden werden, und zwar in einer exothermen Reaktion, das heißt unter Abgabe von Wärme. Es findet so eine Trocknung der anfänglich feuchtwarmen Luft, das heißt eine Entfeuchtung derselben statt und die getrocknete Luft gelangt alsdann von der Sorptionseinheit zurück in den Spülraum. Mittels eines Gebläses erfolgt eine Umwälzung der Luft und der so erzeugte Luftaustausch zwischen dem Spülraum und der Sorptionseinheit wird so lange aufrecht erhalten, bis eine wunschgemäße Trocknung der Luft und damit auch des im Spülraum befindlichen Spülgutes erreicht ist.

Nach Abschluss der Lufttrocknung liegt in der Sorptionseinheit gesättigtes, feuchtes Sorptionsmittel vor. Zum Zwecke der Regenerierung, das heißt Desorption des Sorptionsmittels wird dieses erhitzt. Dies geschieht beispielsweise mittels einer elektrischen Heizung. Infolgedessen tritt das vom Sorptionsmittel zuvor durch Kondensation aufgenommene Wasser als Wasserdampf aus und kann der Sorptionseinheit entnommen werden. Typischerweise wird der bei einem Regeneriervorgang freiwerdende heiße Wasserdampf zum Zwecke der Wasser- und Wärmerückgewinnung dem Spülraum zugeführt, wo dann beispielsweise zu Beginn eines neuen Spülgangs eine Erwärmung von Spülflotte und/oder des im Spülraum befindlichen Spülguts erfolgen kann.

In der EP 2301409 A1 ist offenbart, dass die Sorptionseinheit innerhalb eines Wasserbehälters angeordnet ist. Nach der Desorption des Sorptionsmittels wird dieser mit Frischwasser gefüllt, wodurch sich das Frischwasser aufheizt. Anschließend wird das erwärmte Frischwasser in den Spülraum geleitet.Obgleich sich die aus dem Stand der Technik vorbekannte Sorptionstrocknung im alltäglichen Praxiseinsatz bewährt hat, besteht Verbesserungsbedarf, insbesondere hinsichtlich einer optimierten Nutzung. So ist es für die vorbekannte Sorptionstrocknung zwingende Voraussetzung, dass der bei der Desorption des Sorptionsmittels freiwerdende Wasserdampf zum Zeitpunkt seiner Entstehung überhaupt nutzbar ist. Dies ist während des Ablaufs eines Spülprogramms typischerweise immer dann der Fall, wenn kalte Spülflotte in den Spülraum eingeleitet wird und eine Aufheizung dieser Spülflotte erforderlich ist. Während des Ablaufs eines Spülprogramms gibt es also nur verhältnismäßig kleine Zeitfenster, innerhalb welcher eine effektive Nutzung des bei einer Desorption freiwerdenden Wasserdampfes möglich ist. Innerhalb dieser vergleichsweise kurzen Zeitfenster kann aber in aller Regel nicht eine vollständige Desorption durchgeführt werden, so dass es entweder nur zu Teildesorptionen kommt und/oder freiwerdender Wasserdampf nicht in Gänze genutzt, sondern an die Umgebungsatmosphäre abgegeben wird. Im Ergebnis ist die auch mit der Sorptionstrocknung bereits erzielte Energierückgewinnung weiter optimierbar.

Ausgehend vom Vorbeschriebenen ist es deshalb die Aufgabe der Erfindung, einen Spülautomaten der eingangs genannten Art vorzuschlagen, der hinsichtlich seiner Energieeffizienz noch weiter verbessert ist.

Zur Lösung dieser Aufgabe wird mit der Erfindung vorgeschlagen ein Spülautomat mit den Merkmalen von Anspruch 1.

Der Spülautomat nach der Erfindung verfügt über einen Boiler. Dieser Boiler dient dazu, Wasser, typischerweise vollentsalztes Frischwasser aufzuheizen. Dieses boileraufgeheizte Wasser dient insbesondere zur Desinfektion und wird im letzten Reinigungsschritt eines Spülprogramms in den Spülraum eingeleitet. Die zum Zwecke der Desinfektion zu erreichende Wassertemperatur beträgt wenigstens 80°C, vorzugsweise wenigstens 90°C, typischerweise ca. 93°C.

Bei aus dem Stand der Technik vorbekannten Boilern kommt zur Wassererwärmung eine elektrische Heizeinrichtung zum Einsatz, beispielsweise eine solche, die über Tauchsiederstäbe verfügt. Im bestimmungsgemäßen Verwendungsfall wird der Boilerbehälter des Boilers mit kaltem, vollentsalztem Wasser befüllt. Mittels der Heizeinrichtung des Boilers erfolgt alsdann eine Aufheizung des Wassers, und zwar zeitlich abgestimmt auf das momentan durchgeführte Spülprogramm derart, dass zu Beginn des letzten Spülprogrammschritts das vom Boiler bevorratete Wasser die Desinfektionstemperatur von wenigstens 93°C aufweist, so dass mit Beginn des letzten Spülprogrammschrittes das vom Boiler aufgeheizte Wasser aus dem Boiler in den Spülraum einströmen kann.

Erfindungsgemäß ist vorgesehen, dass der Boiler nicht nur strömungstechnisch mit dem Spülraum sondern auch mit der Sorptionseinheit verbunden ist. Die Sorptionseinheit ist demnach strömungstechnisch sowohl an den Spülraum als auch an den Boiler angeschlossen.

Im bestimmungsgemäßen Verwendungsfall erlaubt es die erfindungsgemäße Ausgestaltung, dass der im Falle der Desorption des Sorptionsmittels freiwerdende Wasserdampf in den Boiler eingeleitet wird. Hier findet dann eine Erwärmung des vom Boiler bevorrateten Wassers mittels des der Sorptionseinheit entstammenden Wasserdampfes statt. Im Unterschied zum vorbeschriebenen Stand der Technik wird der im Desorptionsfall der Sorptionseinheit entstammende Wasserdampf also nicht dazu genutzt, die im Spülraum befindliche Spülflotte und/oder im Spülraum befindliches Spülgut aufzuwärmen. Der Wasserdampf wird vielmehr dazu genutzt, das im weiteren Ablauf des Spülprogramms zu Desinfektionszwecken zu nutzende Wasser im Boiler aufzuheizen.

Diese erfindungsgemäße Ausgestaltung erbringt insbesondere den Vorteil, dass eine Desorption unabhängig vom Ablauf eines Spülprogramms durchgeführt werden kann. Im Unterschied zur Ausgestaltung nach dem Stand der Technik setzt die erfindungsgemäße Ausgestaltung nicht die Nutzung vorbestimmter Zeitfenster innerhalb des Spülprogramms voraus. Dies deshalb nicht, weil der im Desorptionsfall freiwerdende Wasserdampf nicht zur direkten Aufheizung der im Spülraum befindlichen Spülflotte genutzt wird. Die erfindungsgemäße Ausgestaltung ermöglicht es vielmehr, zu einem quasi beliebigen Zeitpunkt während des Ablaufs eines Spülprogramms mit der Desorption zu beginnen und diese vollständig bis zur abschließenden Desorption des Sorptionsmittels durchzuführen. Eine zeitliche Anpassung des Desorptionsvorgangs an das laufende Spülprogramm ist nur insoweit vorzunehmen, als dass mit Beginn des letzten Spülprogrammschrittes das vom Boiler bevorratete Wasser die gewünschte Desinfektionstemperatur (typischerweise von 93°C) erreicht hat.

Von Vorteil der erfindungsgemäßen Ausgestaltung ist ferner, dass bei entsprechender Dimensionierung von Sorptionseinheit einerseits und Boiler andererseits eine solche Energierückführung aus der Sorptionseinheit in den Boiler stattfinden kann, dass die vom Boiler bevorratete Wassermenge ohne zusätzlichen Einsatz der Boilerheizung auf die gewünschte Desinfektionstemperatur von wenigstens 80°C, vorzugsweise wenigstens 90°C, typischerweise ca. 93°C, gebracht werden kann. Dabei erfolgt nicht nur eine Rückführung der bei der Desorption freiwerdenden Wärme, auch das dabei freiwerdende Wasser wird zurückgeführt, denn dieses kondensiert aus dem dem Boiler zugeführten Wasserdampf innerhalb des Boilers aus, vermischt sich also mit dem im Boiler bevorrateten und aufzuheizenden Wasser. Es ist insoweit gestattet, dem Boiler von vornherein weniger Wasser als für die Desinfektion tatsächlich benötigt zuzuführen, da im bestimmungsgemäßen Verwendungsfall dem Boiler durch den Wasserdampfeintrag zusätzliches Wasser zugeführt wird.

Die erfindungsgemäße Ausgestaltung erweist sich noch aus einem weiteren Grund als vorteilhaft. So wird es dank der erfindungsgemäßen Konstruktion erstmals möglich, einen Recyclingtank in Form eines Vorratsbehälters sinnvoll einsetzen zu können. So hat es sich gezeigt, dass sich das vom Boiler zu Desinfektionszwecken erhitzte Wasser während der eigentlichen Desinfektion innerhalb des Spülraums kaum abkühlt. So hat das zu Desinfektionszwecken erhitzte Wasser nach Abschluss einer bestimmungsgemäßen Desinfektion immer noch eine Temperatur von in der Regel über 80°C, je nach Beladungszustand des Spülautomaten. Dieses noch vergleichsweise sehr heiße Wasser ist darüber hinaus wenig verunreinigt, das heißt vergleichsweise sauber, so dass es in einem nachfolgenden Spülprogramm als Spülflotte genutzt werden kann. Um dies zu ermöglichen, ist erfindungsgemäß ein Vorratsbehälter vorgesehen, der an den Spülraum strömungstechnisch angeschlossen ist. Dies macht es möglich, das am Ende eines Desinfektionsschrittes noch heiße Wasser aus dem Spülraum in einen Vorratsbehälter abzuführen und dort bis zur weiteren Verwendung in einem nachfolgenden Spülprogramm zu bevorraten.

Die erfindungsgemäße Ausgestaltung macht mithin eine Verfahrensdurchführung wie folgt möglich. Mit Beendigung eines bestimmungsgemäßen Spülprogrammschritts wird eine Trocknung des gereinigten Spülgutes mittels Sorptionstrocknung eingeleitet. In aus dem Stand der Technik an sich bekannter Weise kommt es infolgedessen zu einer Sorption des von der Sorptionseinheit bereitgestellten Sorptionsmittels. In einem diesem Spülprogramm nachfolgenden Spülprogramm findet dann eine Desorption des Sorptionsmittels statt, wobei der infolge der Desorption freiwerdende Wasserdampf dazu genutzt wird, dass in einem Boiler des Spülautomaten befindliche Wasser auf Desinfektionstemperatur aufzuheizen. Nach Abschluss dieser Desorption steht die Sorptionseinheit für die in dem momentan durchgeführten Spülprogramm durchzuführende Spülgutrocknung wieder zur Verfügung. Das im Boiler bevorratete heiße Wasser kann indes für eine Spülgutdesinfektion im laufenden Spülprogamm genutzt werden, wobei das nach Abschluss einer solchen Desinfektion noch immer vergleichsweise heiße Wasser nicht verworfen, sondern einem Vorratsbehälter zugeführt wird. Es findet dort eine Bevorratung statt, so dass in einem nachfolgenden Spülprogramm bereits zu Beginn des Spülprogramms heißes Wasser zur Verfügung steht, das gegebenenfalls mit zugeführtem kalten Frischwasser dazu genutzt wird, Spülflotte mit einer wunschgemäßen Anfangstemperatur bereitzustellen.

Die erfindungsgemäße Ausgestaltung ermöglicht mithin eine äußerst effektive Energienutzung, was gegenüber dem Stand der Technik eine weitergehende Optimierung darstellt. So ist es dank der erfindungsgemäßen Ausgestaltung insbesondere möglich, sowohl die während einer Desorption freiwerdende Wärmeenergie als auch das dabei freiwerdende Wasser in nachfolgenden Spülprogrammschritten vollständig wiederzuverwenden. Und auch das nach Abschluss einer bestimmungsgemäßen Desinfektion noch vergleichsweise heiße Wasser geht nicht verloren, denn dieses kann in einem nachfolgenden Spülprogramm ebenfalls wiederverwendet werden.

Gemäß der Erfindung ist ein erster Luftführungskanal vorgesehen. Mittels dieses ersten Luftführungskanals ist die Sorptionseinheit mit dem Spülraum strömungstechnisch verbunden. Dabei stellt der Luftführungskanal einen vom Spülraum zur Sorptionseinheit führenden Zuführkanal und einen von der Sorptionseinheit zum Spülraum führenden Abführkanal bereit. Luftabführseitig ist der Luftführungskanal mit einem ersten Absperrventil ausgerüstet. Im Sorptionsfall, wenn also zum Zwecke der Spülguttrocknung feuchtwarme Luft durch die Sorptionseinheit geführt wird, ist dieses erste Absperrventil geöffnet. Dies ermöglicht eine Umwälzung der aus dem Spülraum stammenden Luft bis zur Erreichung eines wunschgemäßen Trocknungs-, das heißt Entfeuchtungsgrads.

Gemäß der Erfindung ist ein zweiter Luftführungskanal vorgesehen. Dieser zweite Luftführungskanal verbindet die Sorptionseinheit mit dem Boiler strömungstechnisch. In diesem zweiten Luftführungskanal ist ein zweites Absperrventil integriert. Dieses befindet sich bei geöffnetem ersten Absperrventil im geschlossenen Zustand, so dass im Falle der Sorption ein Überströmen von aus dem Spülraum stammender feuchtwarmer Luft unterbunden ist. Im Desorptionsfall ist hingegen das erste Absperrventil geschlossen und das zweite Absperrventil geöffnet, so dass der im Desorptionsfall freiwerdende Wasserdampf ausschließlich in den Boiler zum Zwecke der Wasseraufheizung geleitet wird.

Es ist zudem bevorzugt, dass sowohl das erste und das zweite Absperrventil an eine gemeinsame Steuereinheit angeschlossen sind, mittels welcher eine Ansteuerung der Absperrventile in Abhängigkeit des Ablaufs eines momentan durchgeführten Spülprogramms stattfindet.

Zur Lösung der vorstehend genannten Aufgabe wird verfahrensseitig zudem ein Verfahren zum Betrieb eines Spülautomaten der vorbeschriebenen Art vorgeschlagen, bei dem der während einer Desorption des Sorptionsmittels freiwerdende Wasserdampf ausschließlich dem Boiler zugeführt wird. Dies führt in der schon vorbeschriebenen Weise zu einer Aufheizung des im Boiler befindlichen und im weiteren Ablauf des Spülprogramms zu Desinfektionszwecken genutzten Wassers.

Verfahrensseitig ist desweiteren vorgesehen, dass die während einer Sorption des Sorptionsmittels freiwerdende heiße Luft ausschließlich dem Spülraum zugeführt wird. Dies führt in der schon vorbeschriebenen Weise dazu, dass die im Spülraum befindliche feuchtwarme Luft nach und nach ausgetrieben und durch die dem Sorptionsmittel entstammende getrocknete Luft ersetzt wird. Infolgedessen kommt es zu einer Abtrocknung der im Spülraum befindlichen Spülgüter.

Verfahrensseitig wird desweiteren vorgeschlagen, das dem Boiler entstammende Heißwasser zunächst zu Desinfektionszwecken dem Spülraum und alsdann nach Abschluss einer Desinfektion vom Spülraum dem Vorratsbehälter zugeführt wird. Hier findet eine Bevorratung des auch nach Abschluss einer Desinfektion noch immer vergleichsweise heißen Wassers statt, so dass eine Wiederverwendung desselben in einem nachfolgenden Spülprogramm möglich ist.

Es ist in diesem Zusammenhang bevorzugt, den Vorratsbehälter thermisch zu isolieren, so dass das davon bevorratete Wasser möglichst lange seine Temperatur hält. Sollte ein nachfolgendes Spülprogramm mit einem solchen zeitlichen Verzug zum vorangegangenen Spülprogramm durchgeführt werden, dass das im Vorratsbehälter bevorratete Wasser bereits auf eine vorbestimmbare Temperatur abgekühlt ist, findet eine Verwerfung dieses bevorrateten und zwischenzeitlich abgekühlten Wasser statt.

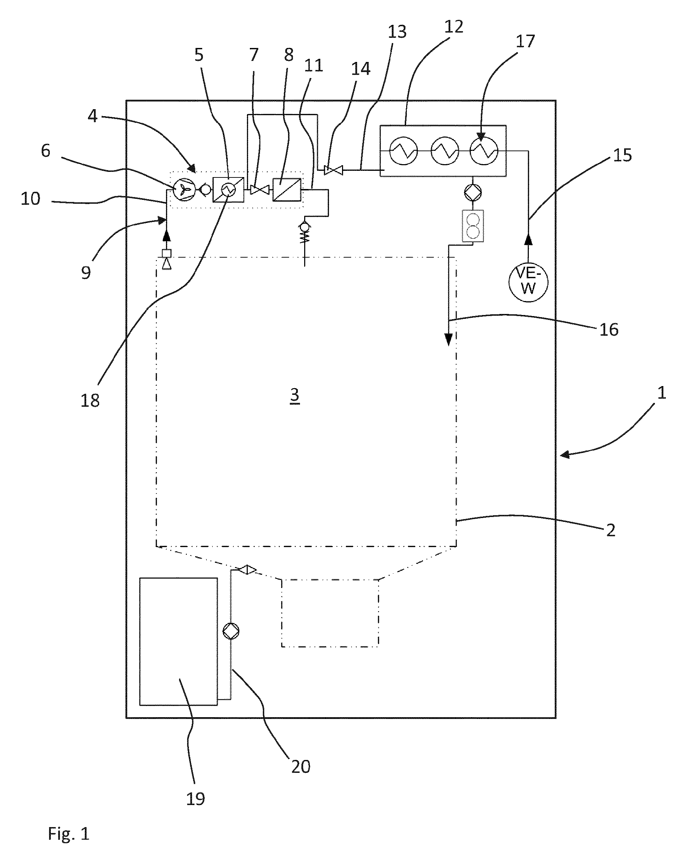

Weitere Merkmale und Vorteile der Erfindung ergeben sich aus der nachfolgenden Beschreibung anhand der einzigen Figur 1, die einen erfindungsgemäßen Spülautomaten in schematischer Ansicht zeigt.

Fig. 1 lässt in schematischer Darstellung einen Spülautomaten 1 nach der Erfindung erkennen, und zwar in der Ausgestaltung als Reinigungs- und/oder Desinfektionsautomaten für gewerbliche Zwecke.

Der Spülautomat 1 verfügt über einen Spülbehälter 2. Dieser stellt seinerseits einen Spülraum 3 bereit, der im bestimmungsgemäßen Verwendungsfall der Aufnahme von zu reinigendem und in der Figur 1 nicht näher dargestelltem Spülgut dient.

Innerhalb des Spülbehälters 2 ist eine in Fig. 1 nicht näher dargestellte Sprüheinrichtung zur Beschickung von zu reinigendem Spülgut mit Spülflotte angeordnet. Diese Sprüheinrichtung verfügt typischerweise über zum Teil verdrehbar innerhalb des Spülraums 3 angeordnete Sprüharme.

Der Spülautomat 1 verfügt desweiteren über eine Trocknungseinrichtung 4. Dabei ist die Trocknungseinrichtung 4 als Sorptionstrocknung ausgebildet und stellt eine Sorptionseinheit 5 bereit. Diese verfügt über einen mit Sorptionsmittel befüllten Behälter sowie über ein elektrisches Heizelement 18, das in dem vom Behälter aufgenommenen Sorptionsmittel eingebettet ist. Als Sorptionsmittel kommt beispielsweise Zeolith zur Anwendung.

Die Sorptionseinheit 5 ist mittels eines ersten Luftführungskanals 9 an den Spülraum 3 strömungstechnisch angeschlossen. Es sind dabei ein Zuführkanal 10 und ein Abführkanal 11 vorgesehen, wobei der Zuführkanal 10 vom Spülraum 3 zur Sorptionseinheit 5 und der Abführkanal 11 von der Sorptionseinheit 5 zum Spülraum 3 reicht. Im Trocknungs-, das heißt Sorptionsfall verlässt im Spülraum 3 befindliche warmfeuchte Luft den Spülraum 3 und gelangt über den Zuführkanal 10 zur Sorptionseinheit 5. Das von der Sorptionseinheit 5 bevorratete Sorptionsmittel wird von der dem Spülraum 3 entstammenden feuchtwarmen Luft durchströmt und gelangt sodann über den Abführkanal 11 zurück in den Spülraum 3. Zum Zwecke der Luftzirkulation dient ein in den Zuführkanal 10 integriertes Gebläse 6. In den Abführkanal 11 sind ein erstes Absperrventil 7 und ein HEPA-Filter 8 integriert.

Der Spülautomat 1 verfügt desweiteren über einen Boiler 12. Dieser ist über eine Wasserzufuhr 15 an eine Wasserquelle angeschlossen. Typischerweise erfolgt eine Beschickung des Boilers 12 mit vollentsalztem Wasser, das im späteren Programmablauf der Desinfektion des im Spülraum befindlichen Spülgutes dient. Der Boiler 12 ist zu diesem Zweck mittels einer Wasserabfuhr 16 an den Spülraum 3 strömungstechnisch angeschlossen.

Zum Zwecke der Wasseraufheizung verfügt der Boiler 12 über eine Heizeinrichtung 17, die im dargestellten Ausführungsbeispiel über eine Mehrzahl von elektrisch betriebenen Tauchsiederstäben verfügt.

Es ist erfindungsgemäß vorgesehen, dass der Boiler 12 und die Sorptionseinheit 5 in strömungstechnischer Verbindung stehen. Zu diesem Zweck ist ein zweiter Luftführungskanal 13 vorgesehen, der ein zweites Absperrventil 14 aufweist.

Das zweite Absperrventil 14 und das erste Absperrventil 7 sind bevorzugterweise an eine in den Figuren nicht näher dargestellte gemeinsame Steuereinrichtung angeschlossen, die der Betätigung der Absperrventile 7 und 14 dient. Dabei ist bei geöffnetem ersten Absperrventil 7 das zweite Absperrventil 14 geschlossen und umgekehrt.

Der Spülautomat 1 ist desweiteren mit einem Recyclingtank, auch als Vorratsbehälter 19 bezeichnet, ausgerüstet. Dieser steht über eine Leitung 20 in strömungstechnischer Verbindung mit dem Spülraum 3.

Die Funktionsweise der Sorptionstrocknung nach der erfindungsgemäßen Ausgestaltung ist die folgende.

Nach Abschluss eines bestimmungsgemäßen Spülprogramms ist das im Spülraum 3 befindliche Spülgut zu trocknen. Zu diesem Zweck wird das zweite Absperrventil 14 geschlossen und das erste Absperrventil 7 geöffnet. Das Gebläse 6 der Trocknungseinrichtung 4 wird eingeschaltet. Infolgedessen stellt sich eine durch den ersten Luftführungskanal 9 geführte Luftströmung ein.

Die durch das Gebläse 6 bedingte Luftströmung sorgt dafür, dass im Spülraum 3 befindliche warmfeuchte Luft ausgetrieben und der Sorptionseinheit 5 zugeführt wird. Es kommt infolgedessen zu einem Kontakt zwischen der warmfeuchten Luft und dem von der Sorptionseinheit 5 bereitgestellten Sorptionsmittel. Dabei wird der warmfeuchten Luft durch das reversibel dehydrierbare Sorptionsmittel Feuchtigkeit durch Kondensation entzogen, infolgedessen es zur Lufttrocknung kommt. Die insoweit getrocknete Luft wird über den Abführkanal 11 des ersten Luftführungskanals 9 zurück in den Spülraum 3 gefördert. Mittels des Gebläses 6 erfolgt im Weiteren eine Umwälzung der Luft und der so erzeugte Luftaustausch zwischen dem Spülbehälter 2 einerseits und der Sorptionseinheit 5 andererseits wird solange aufrechterhalten, bis eine wunschgemäße Trocknung der Luft und damit auch des im Spülraum befindlichen Spülgutes erreicht ist.

Zum Zwecke der Regenerierung, das heißt Desorption des Sorptionsmittels wird dieses erhitzt, zu welchem Zwecke die elektrische Heizung 18 in Betrieb genommen wird. Dabei erfolgt die Desorption bei geschlossenem ersten Absperrventil 7 und geöffnetem zweiten Absperrventil 14.

Infolge der Aufheizung des Sorptionsmittels tritt aus dem Sorptionsmittel das zuvor aufgenommene Wasser als heißer Wasserdampf aus, es kommt also zu einem Austreiben der vom Sorptionsmittel gehaltenen Feuchtigkeit durch Verdunstung. Während der Aufheizung ist das Gebläse 6 in Betrieb, so dass der der Sorptionseinheit 5 entstammende Wasserdampf über den zweiten Luftführungskanal 13 dem Boiler 12 zugeführt wird. Dabei ist, wie Fig. 1 erkennen lässt, das erste Absperrventil 7 dem HEPA-Filter 8 vorgeschaltet, so dass im Desorptionsfall in vorteilhafter Weise keine feuchten Dämpfe durch den HEPA-Filter geführt werden.

Der in den Boiler 12 eingeführte Wasserdampf dient dazu, im Boiler bevorratetes Wasser aufzuheizen, vorzugsweise bis auf eine Desinfektionstemperatur von über 93°C.

Im bestimmungsgemäßen Desinfektionsfall wird das im Boiler auf die Desinfektionstemperatur aufgeheizte Wasser dem Spülraum 3 mittels der Wasserabfuhr 16 zugeleitet. Es kann dann innerhalb des Spülraums 3 eine bestimmungsgemäße Desinfektion des vom Spülraum 3 aufgenommenen Spülguts stattfinden.

Nach Abschluss einer Desinfektion ist das zum Zwecke der Desinfektion genutzte Wasser noch vergleichsweise heiß, je nach Beladungszustand des Spülautomaten 1 gegebenenfalls sogar noch mehr als 80°C warm. Um dieses noch heiße Wasser für ein nachfolgendes Spülprogramm nutzbar zu machen, dient der über die Leitung 20 strömungstechnisch mit dem Spülraum verbundene Vorratsbehälter 19. In diesem wird nach Abschluss des Desinfektionsschrittes das noch heiße Wasser abgelassen und bevorratet, bis es in einem nachfolgenden Spülprogramm wiederverwendet werden kann.

Die vorbeschriebene Verfahrensdurchführung zeichnet sich dank der erfindungsgemäßen Ausgestaltung insbesondere dadurch aus, dass eine Desorption des Sorptionsmittels dem Grunde nach zeitlich unabhängig vom durchzuführenden Spülprogramm absolviert werden kann. Im Unterschied zum Stand der Technik kommt es insbesondere nicht darauf an, vorbestimmte Zeitfenster nutzen zu müssen, innerhalb welcher eine Aufheizung der im Spülraum 3 befindlichen Spülflotte erforderlich ist.

### Bezugszeichen

- 1: Spülautomat
- 2: Spülbehälter
- 3: Spülraum
- 4: Trocknungseinrichtung
- 5: Sorptionseinheit
- 6: Gebläse
- 7: erstes Absperrventil
- 8: HEPA-Filter
- 9: erster Luftführungskanal
- 10: Zuführkanal
- 11: Abführkanal
- 12: Boiler
- 13: zweiter Luftführungskanal
- 14: zweites Absperrventil
- 15: Wasserzufuhr
- 16: Wasserabfuhr
- 17: Heizeinrichtung
- 18: Heizelement
- 19: Vorratsbehälter
- 20: Leitung

## Patentansprüche

1. Spülautomat, insbesondere Reinigungs- und/oder Desinfektionsautomat für gewerbliche Zwecke, mit einem einen Spülraum (3) bereitstellenden Spülbehälter (2) und einer Trocknungseinrichtung (4) zur Trocknung von im Spülraum (3) befindlichem Spülgut, wobei die Trocknungseinrichtung (4) eine ein reversibel dehydrierbares Sorptionsmittel bereitstellende Sorptionseinheit (5) aufweist, die über einen ersten Luftführungskanal (9) mit dem Spülraum (3) in strömungstechnischer Verbindung steht, sowie mit einem Boiler (12) zur Bevorratung und Erhitzung von Wasser, der mittels einer Wasserabfuhr (16) strömungstechnisch an den Spülraum (3) angeschlossen ist,
**dadurch gekennzeichnet, dass**
die Sorptionseinheit (5) über einen zweiten Luftführungskanal (13) mit dem Boiler (12) in strömungstechnischer Verbindung steht,
so dass während einer Desorption des Sorptionsmittels freiwerdender Wasserdampf dem Boiler (12) über den zweiten Luftführungskanal (13) zuführbar ist.

2. Spülautomat nach Anspruch 1, **dadurch gekennzeichnet, dass** luftabführseitig des ersten Luftführungskanals (9) ein erstes Absperrventil (7) vorgesehen ist.

3. Spülautomat nach Anspruch 1 oder 2, **dadurch gekennzeichnet, dass** der zweite Luftführungskanal (13) ein zweites Absperrventil (14) aufweist.

4. Spülautomat nach Anspruch 3, **dadurch gekennzeichnet, dass** das erste und das zweite Absperrventil (7, 14) an eine gemeinsame Steuereinheit angeschlossen sind.

5. Spülautomat nach einem der vorhergehenden Ansprüche, **gekennzeichnet durch** einen an den Spülraum (3) strömungstechnisch angeschlossenen Vorratsbehälter (19).

6. Verfahren zum Betrieb eine Spülautomaten (1) nach einem der vorhergehenden Ansprüche 1 bis 5, bei dem der während einer Desorption des Sorptionsmittels freiwerdende Wasserdampf ausschließlich dem Boiler (12) zugeführt wird.

7. Verfahren nach Anspruch 6, bei dem die während einer Sorption des Sorptionsmittels freiwerdende heiße Luft ausschließlich dem Spülraum (3) zugeführt wird.

8. Verfahren nach Anspruch 6 oder 7, bei dem dem Boiler (12) entnommene Spülflotte zunächst dem Spülraum (3) und alsdann vom Spülraum (3) dem Vorratsbehälter (19) zugeführt wird.

## Claims

1. Automatic washing machine, in particular a cleaning and/or disinfection machine for commercial purposes, having a washing container (2) providing a washing chamber (3), and a drying device (4) for drying washware located in the washing chamber (3), the drying device (4) comprising a sorption unit (5) providing a sorbent that can be reversibly dehydrogenated, which sorption unit is in fluid connection with the washing chamber (3) via a first air-conducting channel (9), and having a boiler (12) for storing and heating water, which boiler is fluidically connected to the washing chamber (3) by means of a water outlet (16),
**characterised in that**
the sorption unit (5) is in fluid connection with the boiler (12) via a second air-conducting channel (13),
such that water vapour released during desorption of the sorbent can be supplied to the boiler (12) via the second air-conducting channel (13).

2. Automatic washing machine according to claim 1, **characterised in that** a first shut-off valve (7) is provided on the air outlet side of the first air-conducting channel (9).

3. Automatic washing machine according to either claim 1 or claim 2, **characterised in that** the second air-conducting channel (13) comprises a second shut-off valve (14).

4. Automatic washing machine according to claim 3, **characterised in that** the first and the second shut-off valves (7, 14) are connected to a common control unit.

5. Automatic washing machine according to any of the preceding claims, **characterised by** a storage tank (19) connected fluidically to the washing chamber (3).

6. Method for operating an automatic washing machine (1) according any of the preceding claims 1 to 5, wherein the water vapour released during desorption of the sorbent is supplied solely to the boiler (12).

7. Method according to claim 6, wherein the hot air released during sorption of the sorbent is supplied solely to the washing chamber (3).

8. Method according to either claim 6 or claim 7, wherein washing solution removed from the boiler (12) is supplied initially to the washing chamber (3) and then from the washing chamber (3) to the storage tank (19).

## Revendications

1. Appareil de lavage automatique, en particulier appareil automatique de nettoyage et/ou de désinfection à des fins professionnelles, avec une cuve de lessivage (2) fournissant un espace de lavage (3) et avec un système de séchage (4) pour le séchage d'articles à sécher présents dans l'espace de lavage (3), dans lequel le système de séchage (4) présente une unité de sorption (5), fournissant un agent de sorption déshydrogénable de façon réversible, qui est en raccordement d'écoulement avec l'espace de lavage (3) par le biais d'un premier canal de guidage d'air (9), ainsi qu'avec un chauffe-eau (12) pour le stockage et le chauffage d'eau qui est en liaison d'écoulement avec l'espace de lavage (3) au moyen d'une évacuation d'eau (16),
**caractérisé en ce que**
l'unité de sorption (5) est en raccordement d'écoulement avec le chauffe-eau (12) par le biais d'un deuxième canal de guidage d'air (13),
de telle sorte que de la vapeur d'eau libérée pendant une désorption de l'agent de sorption peut être conduite au chauffe-eau (12) par le biais du deuxième canal de guidage d'air (13).

2. Appareil de lavage automatique selon la revendication 1, **caractérisé en ce qu'**il est prévu une première vanne d'arrêt (7) sur le côté évacuation d'air du premier canal de guidage d'air (9).

3. Appareil de lavage automatique selon la revendication 1 ou 2, **caractérisé en ce que** le deuxième canal de guidage d'air (13) présente une deuxième vanne d'arrêt (14).

4. Appareil de lavage automatique selon la revendication 3, **caractérisé en ce que** la première et la deuxième vanne d'arrêt (7, 14) sont reliées à une unité de commande commune.

5. Appareil de lavage automatique selon l'une des revendications précédentes, **caractérisé par** un réservoir de stockage (19) en liaison d'écoulement avec l'espace de lavage (3).

6. Procédé de fonctionnement d'un appareil de lavage automatique (1) selon l'une des revendications précédentes 1 à 5, dans lequel de la vapeur d'eau libérée pendant une désorption de l'agent de sorption est acheminée exclusivement au chauffe-eau (12).

7. Procédé selon la revendication 6, dans lequel l'air chaud libéré pendant une sorption de l'agent de sorption est acheminé exclusivement à l'espace de lavage (3).

8. Procédé selon la revendication 6 ou 7, dans lequel du bain de lavage prélevé du chauffe-eau (12) est acheminé d'abord à l'espace de lavage (3) et puis à partir de l'espace de lavage (3) vers le réservoir de stockage (19).
